(19) Europäisches Patentamt
European Patent Office
Office européen des brevets

(11) **EP 2 730 021 B1**

(12) **EUROPÄISCHE PATENTSCHRIFT**

(45) Veröffentlichungstag und Bekanntmachung des Hinweises auf die Patenterteilung:
**26.04.2017   Patentblatt 2017/17**

(21) Anmeldenummer: **12728096.4**

(22) Anmeldetag: **20.06.2012**

(51) Int Cl.:
*H02P 6/00* (2016.01)          *H02M 7/66* (2006.01)
*H02P 25/22* (2006.01)          *H02P 27/08* (2006.01)

(86) Internationale Anmeldenummer:
**PCT/EP2012/061795**

(87) Internationale Veröffentlichungsnummer:
**WO 2013/007486 (17.01.2013 Gazette 2013/03)**

(54) **VERFAHREN ZUR ANSTEUERUNG EINER MEHRPHASIGEN MASCHINE**

METHOD FOR ACTUATING A MULTI-PHASE MACHINE

PROCÉDÉ DE COMMANDE D'UNE MACHINE POLYPHASÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2011   DE 102011078841**

(43) Veröffentlichungstag der Anmeldung:
**14.05.2014   Patentblatt 2014/20**

(73) Patentinhaber: **Robert Bosch GmbH**
**70442 Stuttgart (DE)**

(72) Erfinder:
• **MEHRINGER, Paul**
**70569 Stuttgart (DE)**
• **MAGINI, Fabio**
**71282 Hemmingen (DE)**

(56) Entgegenhaltungen:
WO-A1-2005/034333          WO-A1-2009/106673
DE-A1- 19 947 476          US-B1- 6 392 905

**Beschreibung**

Die Erfindung betrifft ein Verfahren zur Ansteuerung einer mehrphasigen Maschine.

Stand der Technik

Elektrische Drehfeldantriebe sind bekannt. Dabei kommen verschiedene Modulationsarten zum Einsatz. Sehr verbreitet bei Drehfeldantrieben ist ein Einsatz einer Pulsweitenmodulation (PWM). Eine Regelung bei derartigen Drehfeldantrieben erfolgt in Abhängigkeit von den jeweils vorliegenden Erfordernissen nach einer der folgenden Methoden:

- Verwendung einer sinusförmigen Stromregelung (Sinuskommutierung),
- Verwendung einer blockförmigen Stromregelung (Blockbestromung),
- Verwendung von blockförmigen Spannungen (Steuerung mit Blockspannungen),
- Verwendung einer sinusförmigen Spannungsregelung mit überlagerten Nullspannungen.

Grundsätzlich lassen sich die vorstehend genannten Techniken bei elektrischen Maschinen mit einer beliebigen Phasenzahl anwenden. In der Praxis findet man am Häufigsten elektrische Maschinen mit drei Phasen. Es gibt jedoch auch elektrische Maschinen mit einer anderen Phasenzahl, beispielsweise elektrische Maschinen mit einer, zwei, vier, fünf, sechs, sieben oder neun Phasen.

Des Weiteren sind bereits sogenannte Start-Stopp-Systeme bekannt. Diese dienen zum Stoppen und Wiederstarten eines Verbrennungsmotors zum Zwecke einer Reduktion des Kraftstoffverbrauchs und der Abgasemissionen.

Ein von der Anmelderin entwickeltes Start-Stopp-System arbeitet auf der Basis von konventionellen Startern. Dabei wird der jeweilige Starter durch ein elektronisches Steuergerät angesteuert und greift mittels eines Ritzels in einen am Schwungrad vorgesehenen Zahnkranz ein.

Des Weiteren wurde bereits vorgeschlagen, einen Startergenerator im Riementrieb (RSG) auf Basis eines Klauenpolgenerators mit einem zusätzlichen elektronischen Steuergerät zu realisieren. Bei derartigen Startergeneratoren werden oftmals die Phasen direkt über elektronische Halbleiterschalter mit einer Gleichspannungsquelle wie z.B. einer Batterie verbunden, ohne dass ein Taktverfahren wie beispielsweise die PWM angewendet wird.

Um im Bremsfall höhere Energien rekuperieren zu können, sind Systeme mit höheren Spannungen notwendig. Bei höheren Spannungen wird für ein Starten des Verbrennungsmotors eine Taktung der Versorgungsspannung im Umrichter notwendig, um den Strom in der Maschine auf einen vorgegebenen maximalen Wert zu begrenzen. Ein getakteter Umrichter erfordert einen Zwischenkreis mit Kondensatoren hoher Kapazität, um die Wechselanteile im Aufnahmestrom zu glätten. In den Endstufen bestimmt oftmals die Dimensionierung der Zwischenkreise den Platzbedarf für die jeweilige Endstufe.

Wie oben ausgeführt wurde, kommen bei den genannten Maschinen Betriebsarten mit Taktverfahren (PWM) bei höheren Spannungen und Betriebsarten mit Blockkommutierungen (ohne PWM) bei niedrigeren Spannungen oder bei höheren Drehzahlen zum Einsatz. Bei den Taktverfahren ist eine Strommessung von besonderer Bedeutung, da bei diesen Taktverfahren eine Stromregelung durchgeführt wird, zu welcher eine Messung der Iststroöme notwendig ist.

Für eine Strommessung in den einzelnen Phasen der elektrischen Maschine kommen entweder Shunt-Widerstände zum Einsatz, die den Strom in ein äquivalentes Spannungssignal umwandeln, oder es werden indirekte Strommessverfahren verwendet, beispielsweise Stromübertrager oder LEM-Wandler.

Offenbarung der Erfindung

Ein Verfahren mit den im Anspruch 1 angegebenen Merkmalen weist demgegenüber den Vorteil auf, dass die auftretenden Zwischenkreisströme im Vergleich zu bekannten Ansteuerverfahren stark reduziert sind. Dieser Vorteil wird durch ein Verfahren zur Ansteuerung einer mit einer Gleichspannungsquelle verbundenen mehrphasigen Maschine erreicht, welche einen mit einem Zwischenkreiskondensator versehenen Zwischenkreis und pro Phase einen Highside-Schalter und einen Lowside-Schalter aufweist, wobei die den einzelnen Phasen zugeordneten Schalter von einer Steuereinheit mit Steuersignalen beaufschlagt werden, wobei die Steuereinheit zur Reduzierung des Zwischenkreisstromes blockförmige Steuersignale für die den einzelnen Phasen zugeordneten Schalter derart bereitstellt, dass trapezförmige oder pulsförmige Phasenströme vorgegeben werden, dass zu jedem Zeitpunkt eines jeden Ansteuerzyklusses mindestens ein Phasenstrom zugeschaltet ist und dass das Amplidutenverhältnis der vorgegebenen Phasenströme betragsmäßig so gewählt ist, dass die momentan zugeschalteten Phasenströme dem momentanen Strom der Gleichspannungsquelle entsprechen.

Nachfolgend wird die Erfindung anhand der Zeichnung näher erläutert. Es zeigt

Figur 1    eine Skizze zur Erläuterung einer an eine Gleichspannungsquelle wie z.B. eine Batterie angeschlossenen fünfphasigen Maschine in Drudenfußverschaltung mit einer B10-Brücke,

Figur 2　Diagramme zur Veranschaulichung eines bekannten Center-Aligned-Ansteuerungsmusters und dabei auftretender Ströme,

Figur 3　ein vergrößerter Ausschnitt aus den in der Figur 2 gezeigten Diagrammen,

Figur 4　Diagramme zur Veranschaulichung eines fünfphasigen Sinussystems,

Figur 5　Diagramme zur Veranschaulichung eines ersten verbesserten Ansteuermusters und des dabei auftretenden Zwischenkreisstromes,

Figur 6　Diagramme zur Veranschaulichung eines zweiten verbesserten Ansteuermusters und des dabei auftretenden Zwischenkreisstromes,

Figur 7　Diagramme zur Veranschaulichung des Phasenstromverlaufs über einer elektrischen Periode angegeben in 2*Pi eines ersten Ausführungsbeispiels für die Erfindung (4:1),

Figur 8　Diagramme zur Veranschaulichung des Phasenstromverlaufs über einer elektrischen Periode angegeben in 2*Pi eines zweiten Ausführungsbeispiels für die Erfindung, wobei die Phasenströme gegenüber Figur 7 invertiert sind (4:1),

Figur 9　Diagramme zur Veranschaulichung des Phasenstromverlaufs über einer elektrischen Periode angegeben in 2*Pi eines dritten Ausführungsbeispiels für die Erfindung (3:2),

Figur 10　Diagramme zur Veranschaulichung eines Ansteuermusters für das in der Figur 7 gezeigte erste Ausführungsbeispiel (4:1),

Figur 11　Diagramme zur Veranschaulichung eines Ansteuermusters für das in der Figur 9 gezeigte Ausführungsbeispiel (3:2),

Figur 12　Diagramme zur Veranschaulichung eines Ansteuermusters zur Realisierung eines Blockstroms mit 2:3-Ansteuerung gemäß einem vierten Ausführungsbeispiel für die Erfindung,

Figur 13　Diagramme zur Veranschaulichung eines Ansteuermusters zur Realisierung eines Blockstroms mit 1:4-Ansteuerung gemäß einem fünften Ausführungsbeispiel für die Erfindung,

Figur 14　Diagramme zur Veranschaulichung eines sechsten Ausführungsbeispiels für die Erfindung,

Figur 15　Diagramme zur Veranschaulichung von Stromverläufen bei Verwendung des in der Figur 10 gezeigten Ansteuermusters,

Figur 16　Diagramme zur Veranschaulichung von Stromverläufen bei einer bekannten Center-Aligned-Ansteuerung und

Figur 17　Diagramme zur Veranschaulichung von Stromverläufen bei Verwendung des in der Figur 11 gezeigten Ansteuermusters.

Die Erfindung betrifft ein Verfahren zur Ansteuerung einer mit einer Gleichspannungsquelle wie z.B. einer Batterie verbundenen mehrphasigen Maschine, welche einen mit einem Zwischenkreiskondensator versehenen Zwischenkreis und pro Phase einen Highside-Schalter und einen Lowside-Schalter aufweist, wobei die den einzelnen Phasen zugeordneten Schalter von einer Steuereinheit mit Steuersignalen beaufschlagt werden. Dieses Verfahren ist nicht an eine bestimmte Phasenzahl der Maschine gebunden, wird aber nachfolgend anhand einer fünfphasigen Maschine näher erläutert.

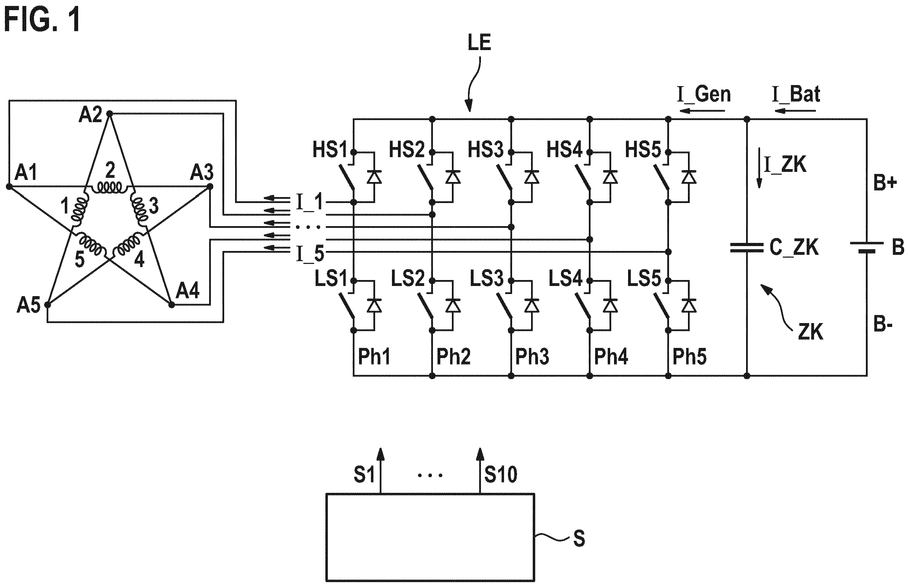

Die Figur 1 zeigt eine Skizze zur Erläuterung einer fünfphasigen Maschine in Drudenfußverschaltung mit einer B10-Brücke. Als Drudenfußverschaltung wird ein Verschaltungstyp verstanden, bei dem die insgesamt fünf Phasenwicklungen der Schaltung elektrisch derart miteinander verbunden sind, dass die Form des Schaltbildes ein Pentagramm ergibt.

Die gezeigte Maschine weist insgesamt fünf Phasenanschlüsse A1, A2, A3, A4, A5 und insgesamt fünf Phasenwicklungen 1, 2, 3, 4, 5 auf, wobei jede dieser Phasenwicklungen zwischen zwei der genannten Phasenanschlüsse geschaltet ist. Des Weiteren weist die gezeigte Maschine eine mit den Phasenanschlüssen verbundene Leistungselektronik LE und eine Gleichspannungsquelle wie z.B. eine Batterie B auf. Die Gleichspannungsquelle B hat einen Pluspol B+ und einen Minuspol B-. Zwischen der Gleichspannungsquelle B und der Leistungselektronik LE befindet sich ein Zwischenkreis ZK, der einen Zwischenkreiskondensator C_ZK enthält.

Die Leistungselektronik LE enthält fünf Zweige Ph1, Ph2, Ph3, Ph4 und Ph5, von denen jeder eine Reihenschaltung zweier Schalter aufweist, wobei jedem dieser Schalter eine Diode antiparallel geschaltet ist. Diese Anordnung ergibt sich bei der Verwendung von herkömmlichen Feldeffekttransistoren als Schalter, da diese eine Inversdiode beinhalten. Grundsätzlich ist jedoch auch die Verwendung von anderen Schaltelementen, beispielsweise IGBTs, möglich.

Der Zweig Ph1 der Leistungselektronik LE, der die Schalter HS1 und LS1 enthält, ist an einem Verbindungspunkt zwischen den beiden Schaltern HS1 und LS1 mit dem Phasenanschluss A1 des Ständers der Maschine verbunden. Der Schalter HS1 des Zweigs Ph1 ist ein Highside-Schalter. Antiparallel zum Schalter HS1 ist eine Diode geschaltet. Der Schalter LS1 des Zweigs Ph1 ist ein Lowside-Schalter. Antiparallel zum Schalter LS1 ist eine Diode geschaltet. Die Schalter HS1 und LS1 werden von einer Steuereinheit S mit Steuersignalen S1 und S2 angesteuert.

Der Zweig Ph2 der Leistungselektronik LE, der die Schalter HS2 und LS2 enthält, ist an einem Verbindungspunkt zwischen den beiden Schaltern HS2 und LS2 mit dem Phasenanschluss A2 des Ständers der Maschine verbunden. Der Schalter HS2 des Zweigs Ph2 ist ein Highside-Schalter. Antiparallel zum Schalter HS2 ist eine Diode geschaltet. Der Schalter LS2 des Zweigs Ph2 ist ein Lowside-Schalter. Antiparallel zum Schalter LS2 ist eine Diode geschaltet. Die Schalter HS2 und LS2 werden von der Steuereinheit S mit Steuersignalen S3 und S4 angesteuert.

Der Zweig Ph3 der Leistungselektronik LE, der die Schalter HS3 und LS3 enthält, ist an einem Verbindungspunkt zwischen den beiden Schaltern HS3 und LS3 mit dem Phasenanschluss A3 des Ständers der Maschine verbunden. Der Schalter HS3 des Zweigs Ph3 ist ein Highside-Schalter. Antiparallel zum Schalter HS3 ist eine Diode geschaltet. Der Schalter LS3 des Zweigs Ph3 ist ein Lowside-Schalter. Antiparallel zum Schalter LS3 ist eine Diode geschaltet. Die Schalter HS3 und LS3 werden von der Steuereinheit S mit Steuersignalen S5 und S6 angesteuert.

Der Zweig Ph4 der Leistungselektronik LE, der die Schalter HS4 und LS4 enthält, ist an einem Verbindungspunkt zwischen den Schaltern HS4 und LS4 mit dem Phasenanschluss A4 des Ständers der Maschine verbunden. Der Schalter HS4 des Zweigs Ph4 ist ein Highside-Schalter. Antiparallel zum Schalter HS4 ist eine Diode geschaltet. Der Schalter LS4 des Zweigs Ph4 ist ein Lowside-Schalter. Antiparallel zum Schalter LS4 ist eine Diode geschaltet. Die Schalter HS4 und LS4 werden von der Steuereinheit S mit Steuersignalen S7 und S8 angesteuert.

Der Zweig Ph5 der Leistungselektronik LE, der die Schalter HS5 und LS5 enthält, ist an einem Verbindungspunkt zwischen den beiden Schaltern HS5 und LS5 mit dem Phasenanschluss A5 des Ständers der Maschine verbunden. Der Schalter HS5 des Zweigs Ph5 ist ein Highside-Schalter. Antiparallel zum Schalter HS5 ist eine Diode geschaltet. Der Schalter LS5 des Zweigs Ph5 ist ein Lowside-Schalter. Antiparallel zum Schalter LS5 ist eine Diode geschaltet. Die Schalter HS5 und LS5 werden von der Steuereinheit S mit Steuersignalen S9 und S10 angesteuert.

Im Betrieb der in der Figur 1 gezeigten Maschine gilt für jeden beliebigen Zeitpunkt die folgende Beziehung:

$$I\_ZK = I\_Bat - I\_Gen.$$

Dabei ergibt sich der Generatorstrom I_Gen in Abhängigkeit von Stellung der Schalter der Leistungselektronik aus einer Überlagerung der Phasenströme I_1 bis I_5 für diejenigen Phasen, deren Highside-Schalter in dem jeweiligen Zeitpunkt durchgesteuert ist.

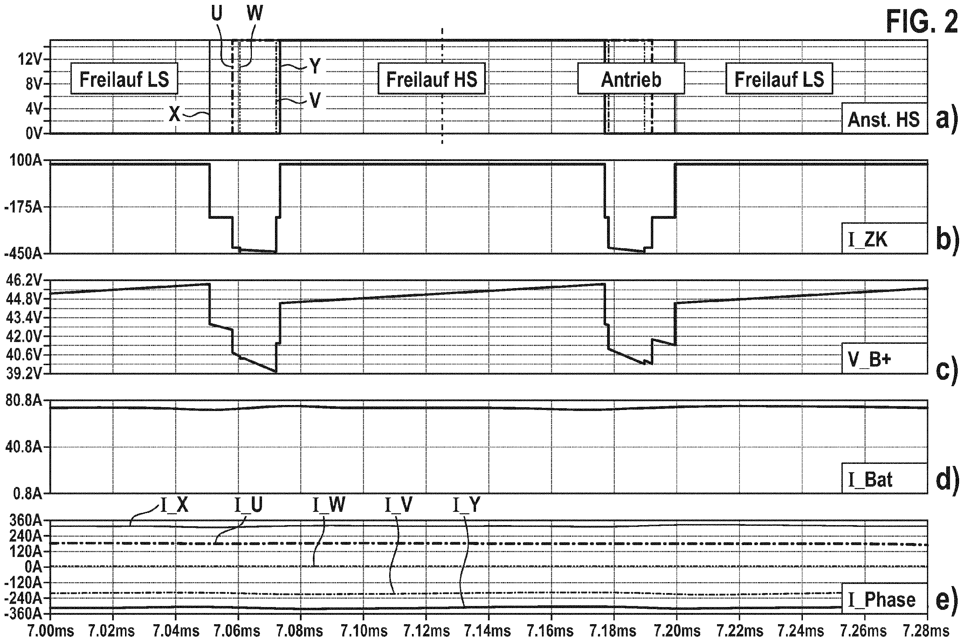

Es ist bereits eine sogenannte Center-Aligned-Ansteuerung bekannt. Bei dieser ist der Zeitbereich für den Stromfluss auf einen kleinen Zeitbereich konzentriert. Ein Ansteuermuster für eine derartige Center-Aligned-Ansteuerung und dabei auftretender Ströme sind in den in der Figur 2 gezeigten Diagrammen veranschaulicht, wobei in der Figur 2 die Ansteuerimpulse für die den Phasen zugeordneten Schalter mit U, V, W, X und Y und die Phasenströme mit I_U, I_V, I_W, I_X und I_Y bezeichnet sind.

Dabei sind in der Figur 2a die Ansteuersignale für die Schalter, in der Figur 2b der Zwischenkreisstrom I_ZK, in der Figur 2c die am Pluspol der Gleichspannungsquelle anliegende Spannung V_B+, in der Figur 2d der Strom der Gleichspannungsquelle I_Bat und in der Figur 2e die Phasenströme I_X bis I_Y dargestellt.

Aus der Figur 2a ist insbesondere ersichtlich, dass bei einer Center-Aligned-Ansteuerung die Pulsmitten der Ansteuerimpulse zeitlich übereinstimmen, wie es durch eine senkrecht gestrichelte Linie in der Figur 2a angedeutet ist. Ferner geht aus der Figur 2a hervor, dass die Flanken der Ansteuerimpulse zeitlich voneinander verschieden sind und sich in einem begrenzten zeitlichen Bereich befinden. Mit dem Text "Freilauf LS" ist angedeutet, dass in diesem Zeitintervall alle Lowside-Schalter durchgesteuert sind. Mit dem Text "Freilauf HS" ist angedeutet, dass in diesem Zeitintervall alle Highside-Schalter durchgesteuert sind. Mit dem Text "Antrieb" wird zum Ausdruck gebracht, dass in diesem engen Zeitfenster durch die Schalterstellungen die el. Maschine an die äußere Spannung angeschlossen wird. Dadurch wird eine Stromänderung in den Ständerwicklungen hervorgerufen. Befindet sich ein Ansteuerimpuls auf dem Spannungsniveau 16 V, dann ist der jeweils zugehörige Highside-Schalter durchgesteuert. Befindet sich ein Ansteuerimpuls auf einem Spannungsniveau von 0 V, dann ist der jeweils zugehörige Lowside-Schalter durchgesteuert.

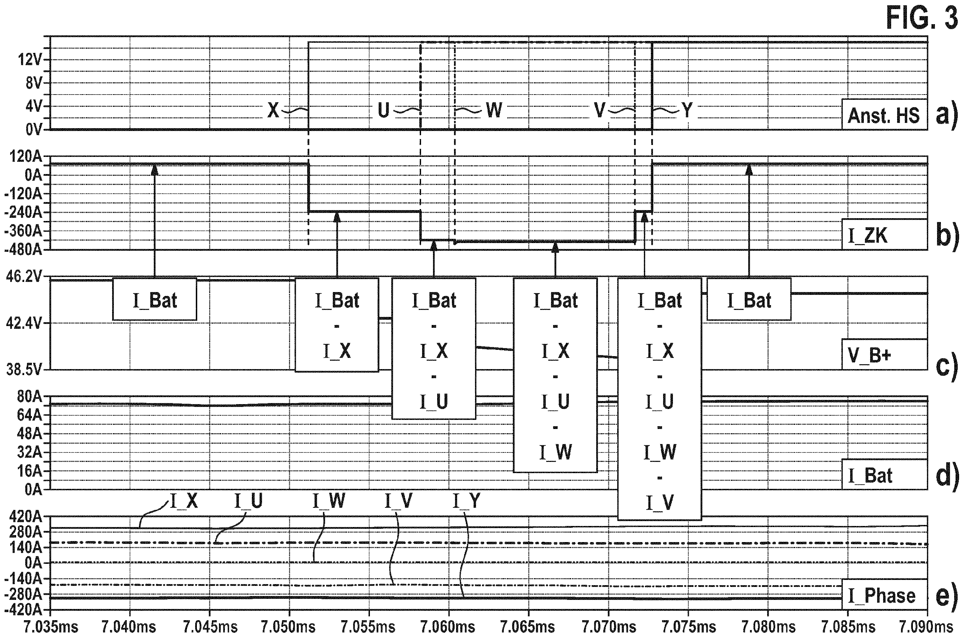

Der Figur 2b ist entnehmbar, dass der Zwischenkreisstrom I_ZK im zeitlichen Bereich der Flanken der Ansteuerimpulse starken Veränderungen unterworfen ist, wie noch anhand der Figur 3 näher veranschaulicht wird.

Aus der Figur 2c ist ersichtlich, dass auch die Batteriespannung V_B+ im zeitlichen Bereich der Flanken der Ansteuerimpulse starken Veränderung unterworfen ist.

Die Figur 2d zeigt den Strom der Gleichspannungsquelle I_Bat und die Figur 2e die Phasenströme I_X bis I_Y, welche in Abhängigkeit von der Stellung des jeweils zugehörigen Highside-Schalters einen Beitrag zum Zwischenkreisstrom leisten oder nicht.

Die Figur 3 zeigt einen vergrößerten Ausschnitt aus den in der Figur 2 gezeigten Diagrammen. Dabei sind in der Figur 3a wiederum die Ansteuersignale für die Schalter, in der Figur 3b der Zwischenkreisstrom I_Zk, in der Figur 3c die am Pluspol der Gleichspannungsquelle anliegende Spannung V_B+, in der Figur 3d der Strom der Gleichspannungsquelle I_Bat und in der Figur 3e die Phasenströme I_X bis I_Y dargestellt.

Aus der Figur 3b ist ersichtlich, dass der Zwischenkreisstrom I_ZK durch eine Überlagerung des Stromes der Gleichspannungsquelle I_Bat mit dem bzw. den jeweils aktiven Phasenströmen gebildet wird und dass im Falle einer Durchsteuerung der den Phasenanschlüssen X, U und W zugehörigen Highside-Schalter ein hoher Zwischenkreisstrom fließt, der im vorliegenden Beispiel etwa - 420 A beträgt, während der Strom der Gleichspannungsquelle etwa 80A und der effektive Phasenstrom etwa 200A beträgt.

Nach alledem geht aus den Figuren 2 und 3 hervor, dass sich bei einer Verwendung der bekannten Center-Aligned-Ansteuerung im Zwischenkreis Stromsprünge einstellen, die mit den einzelnen Schaltereignissen zeitlich korrelieren. Während der Freilaufzeiten, die in der Figur 2 angedeutet sind, d. h. wenn alle Highside- bzw. Lowside-Schalter geschlossen sind, wird I_Gen = 0. Folglich gilt für den Zwischenkreisstrom: I_ZK = I_Bat. In dieser Phase wird der Zwischenkreiskondensator nachgeladen. In der Ansteuerphase summieren sich die Ströme.

Für die Verlustleistungsbetrachtung des Zwischenkreiskondensators ist der Effektivstrom ausschlaggebend. Es gilt die folgende Beziehung:

$$X = \left( \frac{1}{T} \bullet \int\limits_{0}^{T} x(t)^2 \bullet dt \right)^{1/2} .$$

Das arithmetische Mittel des Kondensatorstromes liegt im Falle einer Vernachlässigung der Eigenverluste bei 0. Der Effektivwert steigt stark an, wenn die Ströme stark aufaddiert werden, d. h. wenn der Stromverlauf "spritz" zuläuft. Aufgrund dieses starken Anstiegs des Effektivwertes ist die thermische Belastung des Zwischenkreiskondensators hoch. Eine derartige hohe thermische Belastung, wie sie bei Verwendung einer Center-Aligned-Ansteuerung auftritt, wird bei einem Verfahren gemäß der Erfindung vermieden.

In der DE 10 2011 076 676.6 der Anmelderin wurde bereits vorgeschlagen, die Stromverteilung durch ein neues Ansteuermuster in die Breite zu ziehen und damit den Effektivwert des Zwischenkreisstromes und die thermische Belastung des Zwischenkreiskondensator zu reduzieren.

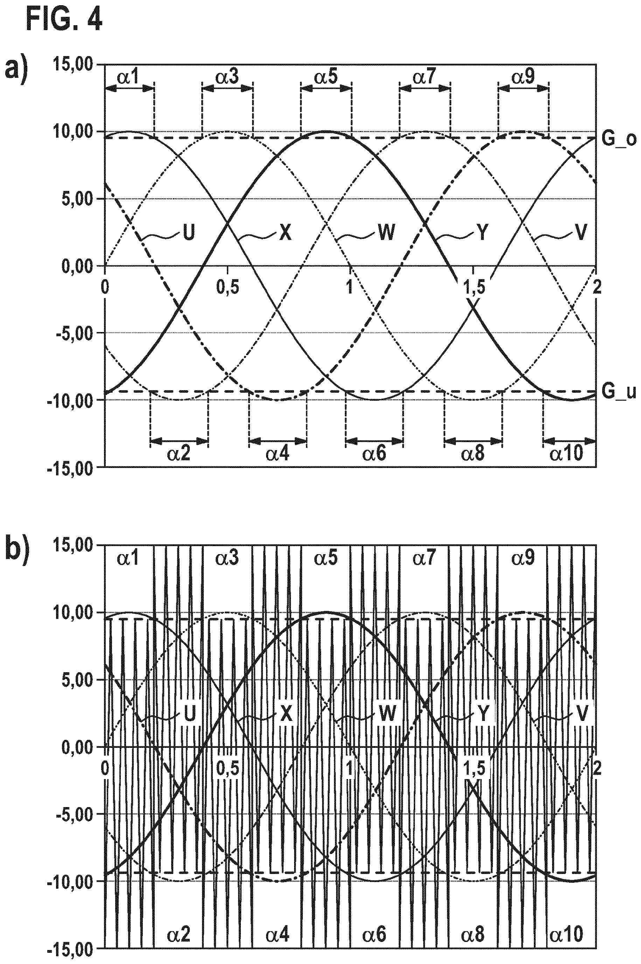

Die Figur 4a zeigt ein Diagramm zur Veranschaulichung eines fünfphasigen Sinussystems, wie es in der DE 10 2011 076 676.6 verwendet wird, wobei in diesem Diagramm die Phasenfolge im Vergleich zu den in den Figuren 2 und 3 gezeigten Diagrammen verändert ist. Dabei sind längs der Abszisse der Winkel in $\pi$-Einheiten und längs der Ordinate Sollspannungsvorgaben aufgetragen. Die zugehörigen Phasenströme sind mit U, V, W, X und Y bezeichnet. Ein oberer Grenzwert ist mit G_o und ein unterer Grenzwert mit G_u bezeichnet. Diese Grenzwerte sind in der Figur 4a gestrichelt veranschaulicht. Der obere Grenzwert G_o ist geringfügig kleiner als der maximale positive Sollspannungswert. Der andere Grenzwert G_u ist geringfügig größer als der minimale negative Sollspannungswert.

Die genannten Grenzwerte werden wie folgt ermittelt:

G_o = U_Soll_amplitude*cos(360°/(4*PZ))

G_u=-G_o,

wobei PZ die Phasenzahl der Maschine ist.

Gemäß der DE 10 2011 076 676.6 stellt die Steuereinheit in aufeinanderfolgenden Ansteuerzyklen pulsförmige Steuersignale für die Schalter bereit, deren Pulsbreiten und Pulsanfänge innerhalb eines Ansteuerzyklus jeweils derart variiert sind, dass der Zwischenkreisstrom reduziert ist.

Dies geschieht beispielsweise nach dem Flattop-Verfahren. Bei diesem Verfahren erfolgt ein aufeinanderfolgendes Durchschalten bestimmter Schalter, wie es nachfolgend erläutert wird.

In der Figur 4a sind Winkelintervalle bzw. Flattopfenster $\alpha1, ..., \alpha10$ markiert, in denen Spannungsvorgaben in dem Sinne existieren, dass entweder der einer Stromphase zugeordnete Sollspannungswert größer ist als der obere Grenzwert G_o oder kleiner ist als der untere Grenzwert G_u. Ist der einer Stromphase zugeordnete Sollspannungswert größer als der obere Grenzwert G_o, dann wird im zugehörigen Winkelintervall der zugehörige Highside-Schalter durchgesteuert. Ist hingegen der einer Stromphase zugeordnete Sollspannungswert kleiner als der untere Grenzwert G_u, dann wird im zugehörigen Winkelintervall der zugehörige Lowside-Schalter durchgesteuert, wie nachfolgend anhand der Figur 4b erläutert wird.

Diese veranschaulicht eine Erzeugung von Ansteuermustern für sinuskommutierte elektrische Maschinen durch einen Sinus-Dreiecks-Vergleich. Durch Beaufschlagung der Dreiecks-Funktion mit einem Offset-Faktor, der jeweils zum Zeitpunkt einer Flattop-Fenster-Umschaltung umgeschaltet wird, ergibt sich automatisch eine rotierende Durchsteuerung der 10 beteiligten Schalter. Die sinusförmigen Signale entsprechen den Sollspannungsvorgaben.

Aus den Figuren 4a und 4b ist ersichtlich, dass

- im Winkelintervall $\alpha1$ der Highside-Schalter der Phase X durchgeschaltet ist,
- im Winkelintervall $\alpha2$ der Lowside-Schalter der Phase V durchgeschaltet ist,
- im Winkelintervall $\alpha3$ der Highside-Schalter der Phase W durchgeschaltet ist,
- im Winkelintervall $\alpha4$ der Lowside-Schalter der Phase U durchgeschaltet ist,
- im Winkelintervall $\alpha5$ der Highside-Schalter der Phase Y durchgeschaltet ist,
- im Winkelintervall $\alpha6$ der Lowside-Schalter der Phase X durchgeschaltet ist,
- im Winkelintervall $\alpha7$ der Highside-Schalter der Phase V durchgeschaltet ist,
- im Winkelintervall $\alpha8$ der Lowside-Schalter der Phase W durchgeschaltet ist,
- im Winkelintervall $\alpha9$ der Highside-Schalter der Phase U durchgeschaltet ist und
- im Winkelintervall $\alpha10$ der Lowside-Schalter der Phase Y durchgeschaltet ist.

Bei einer Phasenverschiebung von Strom und Spannung kann es sinnvoll sein, die Winkelintervalle $\alpha1 - \alpha10$ nach rechts oder links zu verschieben, wobei im vorliegenden Fall eine max. Verschiebung um 18°; allgemein um 360°/(4*Phasenzahl), möglich ist.

In jedem dieser Winkelintervalle werden abgesehen von dem Phasenstrom, der dem jeweils durchgesteuerten Schalter zugehörig ist, alle weiteren Phasenströme zur Reduzierung des Zwischenkreisstromes verwendet. Dies geschieht dadurch, dass die Steuereinheit durch ein geeignetes Ansteuermuster die genannten weiteren Phasenströme relativ zueinander derart verschiebt, dass der resultierende Zwischenkreisstrom reduziert ist. Dies kann dadurch erreicht werden, dass die Verschiebung der genannten weiteren Phasenströme derart erfolgt, dass Überlappungen von positiven Phasenströmen reduziert werden und/oder dadurch, dass die Verschiebung der genannten weiteren Phasenströme derart erfolgt, dass positive und negative Phasenströme sich zumindest teilweise kompensieren.

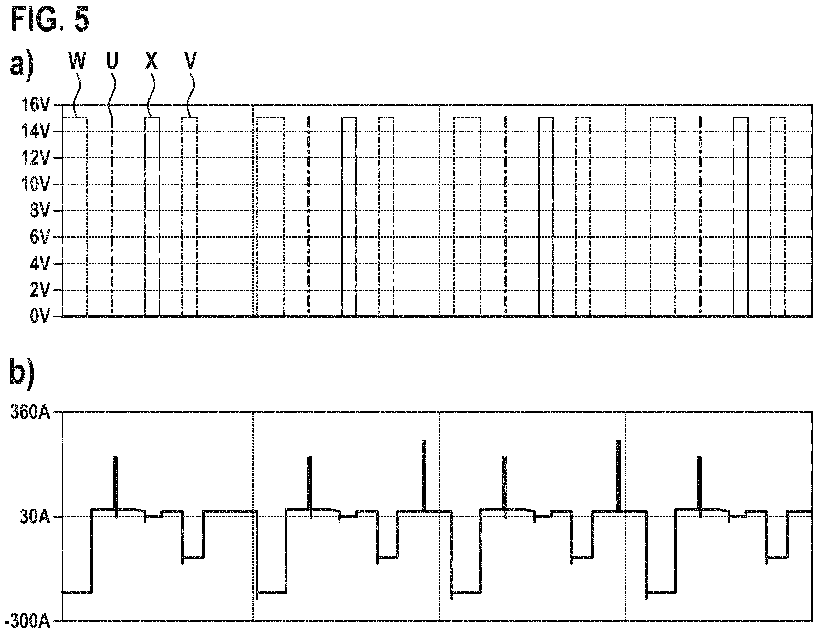

Die Figur 5 zeigt Diagramme zur Veranschaulichung eines Ansteuermusters gemäß der in der DE 10 2011 076 676.6 beschriebenen Erfindung und des dabei auftretenden Zwischenkreisstromes. Dabei ist in der Figur 5a das Ansteuermuster und in der Figur 5b der dabei auftretende Zwischenkreisstrom gezeigt. Aus der Figur 5a ist ersichtlich, dass die den Phasen zugeordneten Ansteuerimpulse für die jeweils zugehörigen Schalter zeitlich voneinander separiert sind, d. h. einander nicht überlagert sind. Aus der Figur 5b ist ersichtlich, dass mit jedem Schaltvorgang gemäß der Figur 5a ein entsprechender Ausgleichsstrom im Zwischenkreis fließt. Die Absolutwerte des Zwischenkreisstromes sind im Vergleich zu dem in der Figur 2b gezeigten Zwischenkreisstrom um ca. 30% und damit deutlich reduziert. Diese Reduktion ist darauf zurückzuführen, dass es nicht mehr aufgrund einer systematischen Überlagerung der Phasenströme zu einer starken Überhöhung des Zwischenkreisstromes kommt.

In einem weiteren Optimierungsschritt können darüber hinaus die in positiver Richtung verlaufenden Stromspitzen des in der Figur 5b gezeigten Zwischenkreisstromes eliminiert werden. Zum Zwecke dieser weiteren Reduzierung des Zwischenkreisstromes wird versucht, einen Zustand herbeizuführen, in welchem sich der Zwischenkreisstrom stets in der Nähe seiner Nulllinie bewegt. Besonders störend in diesem Zusammenhang sind Stromanteile, die eine Addition des Stromes der Gleichspannungsquelle bewirken.

Diese unerwünschte Überlagerung von Phasenströmen wird dadurch vermieden, dass die zugehörigen Ansteuerimpulse innerhalb einer Ansteuerperiode in geeigneter Weise verschoben werden. Diese Verschiebung kann ohne Einschränkung der Wirkung einer Sinuskommutierung innerhalb einer Ansteuerperiode beliebig erfolgen. Folglich kann der effektive Zwischenkreisstrom nochmals reduziert werden, wenn die Ansteuerung der Phasen, deren beide Schalter im momentanen Flattopfenster nicht durchgeschaltet sind, relativ zueinander derart verschoben werden, dass Überlappungen von positiven oder auch negativen Phasenströmen vermieden werden und/oder dass sich positive und negative Phasenströme gegenseitig zumindest teilweise kompensieren.

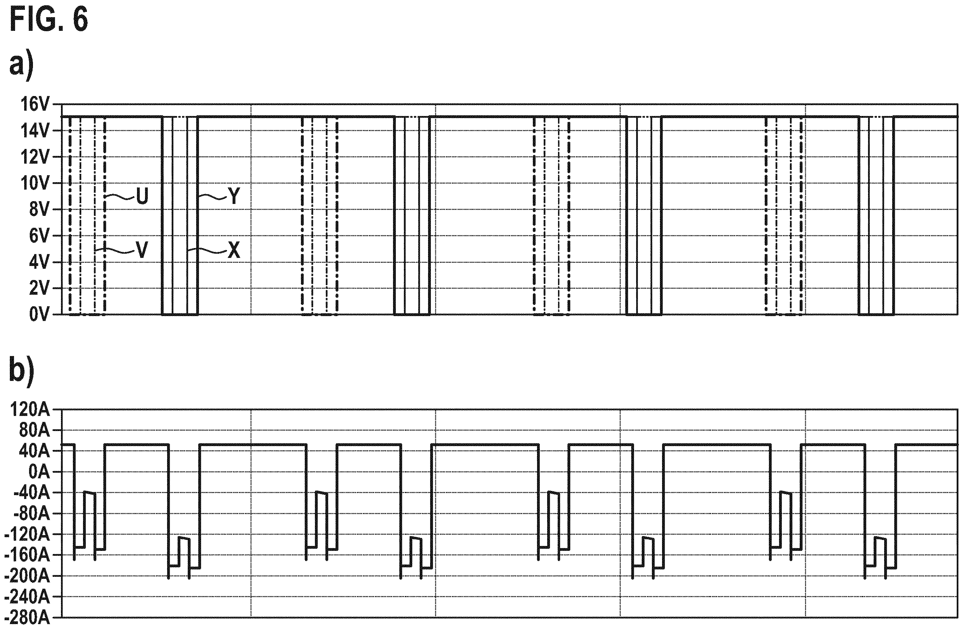

Die Figur 6 zeigt Diagramme zur Veranschaulichung eines Ansteuermusters gemäß der vorstehend beschriebenen Weiterbildung, gemäß welcher eine Überlagerung positiver und negativer Phasenströme derart erfolgt, dass der Zwischenkreisstrom reduziert ist, und des dabei auftretenden Zwischenkreisstromes. Dabei ist in der Figur 6a das Ansteuermuster und in der Figur 6b der dabei auftretende Zwischenkreisstrom gezeigt. Im Vergleich zur Figur 5b ist ersichtlich, dass die positiven Spitzen des Zwischenkreisstromes nicht mehr vorhanden sind. Im Vergleich zur Figur 2b ist ersichtlich, dass die Maximalamplitude des Zwischenkreisstromes reduziert ist und dass die Verteilung des Zwischenkreisstromes verbreitert ist.

Die Figuren 5 und 6 sind im Hinblick auf die jeweils gezeigten Winkelpositionen unterschiedlich gewählt und deshalb nicht direkt miteinander vergleichbar. Der gewünschte Effekt, die positiven Spitzen des Zwischenkreisstromes, wie sie in der Figur 5b gezeigt sind, zu vermeiden, ist jedoch in der Figur 6 korrekt veranschaulicht.

Mittels der vorstehend beschriebenen Ansteuermuster, wie sie Gegenstand der DE 10 2011 076 676.6 sind, kann der Zwischenkreisstrom im Vergleich zu einer herkömmlichen Center-Aligned-Ansteuerung um bis zu 40% reduziert werden. Dabei werden sinusförmige Sollstrom- bzw. Sollspannungsvorgaben verwendet.

Ziel der vorliegenden Erfindung ist eine weitere Reduzierung des Zwischenkreisstromes. Zu diesem Zweck wird die Sinusstromform verlassen. Stattdessen erfolgt eine Phasenstromvorgabe, die entweder einer Trapezform oder idealerweise einer Pulsform folgt.

Um einen Zwischenkreisstrom zu erhalten, der im Idealfall 0 A beträgt, werden folgende Vorgaben gegeben:

- Zu jedem Zeitpunkt eines Ansteuer-zyklusses muss mindestens ein Phasenstrom zugeschaltet sein, der den anliegenden Strom der Gleichspannungsquelle komplett aufnimmt.
- Sobald ein Phasenstrom abgeschaltet wird, muss ein anderer Phasenstrom zugeschaltet werden, der den Strom der Gleichspannungsquelle übernimmt.
- Da der Strom der Gleichspannungsquelle aufgrund der Zuleitungsinduktivität in erster Näherung konstant bleibt, ist es von Vorteil, wenn die auftretenden Phasenströme einem konstanten Wert folgen.
- Innerhalb eines Ansteuerzyklusses darf es keine Ansteuerlücken geben.

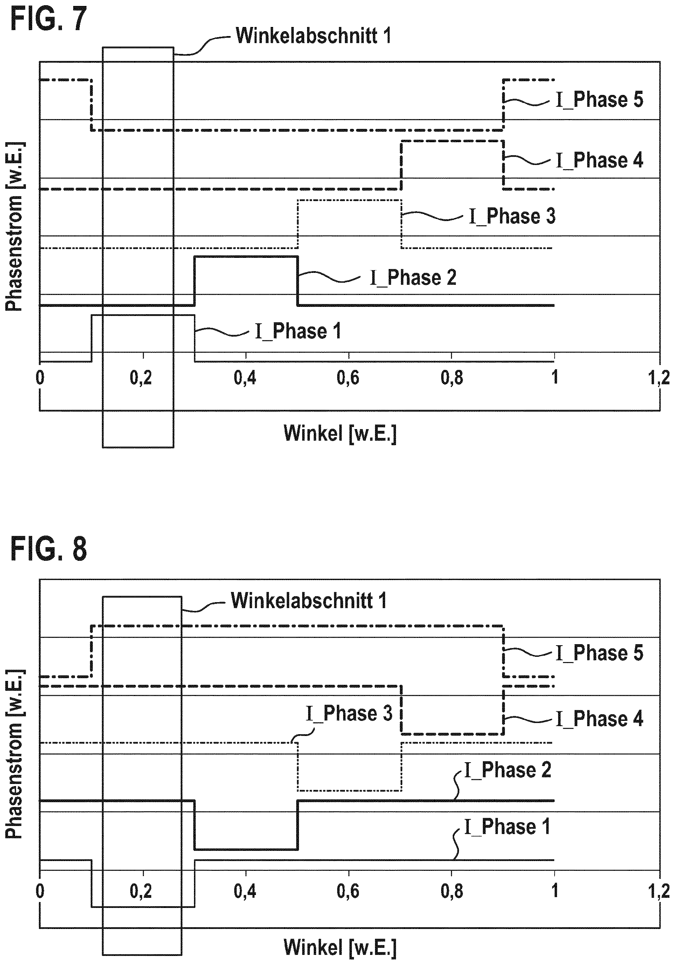

Eine Phasenstromvorgabe, die diese Vorgaben einhält, ist in der Figur 7 gezeigt, in welcher Diagramme zur Veranschaulichung eines ersten Ausführungsbeispiel für die Erfindung gezeigt sind. Dabei sind längs der Abszisse der Winkel in willkürlichen Einheiten (w.E.) und längs der Ordinate die Phasenstromvorgaben für die Phasenströme ebenfalls in willkürlichen Einheiten (w.E.) aufgetragen. Das Strommuster gemäß der Figur 7 zeichnet sich dadurch aus, dass zu jedem Zeitpunkt innerhalb eines Ansteuerzyklusses eine der Phasen einen positiven Stromwert hat, während die anderen vier Phasen jeweils denselben negativen Stromwert aufweisen. Dabei entspricht die Amplitude des negativen Stromwertes einem Viertel der Amplitude des positiven Stromwertes, so dass zu jedem Zeitpunkt eines Ansteuerzyklusses die Summe der Phasenströme 0 beträgt. Innerhalb eines Ansteuerzyklusses tritt keine Lücke auf. Zu jedem Zeitpunkt, an welchem ein positiver Phasenstrom abgeschaltet wird, wird ein anderer positiver Phasenstrom zugeschaltet. Das Amplitudenverhältnis der jeweils zugeschalteten Phasenströme ist betragsmäßig so gewählt, dass die momentan zugeschalteten Phasenströme dem momentanen Strom der Gleichspannungsquelle entsprechen.

Aus dem in der Figur 7 eingezeichneten rechteckigen Kästchen ist ersichtlich, dass in diesem Winkelbereich gilt:

$$I\_Phase1 = - (I\_Phase2 + I\_Phase3 + I\_Phase4 + I\_Phase5).$$

Eine weitere Phasenstromvorgabe, die die genannten Vorgaben einhält, ist in der Figur 8 gezeigt. In dieser sind Diagramme zur Veranschaulichung eines zweiten Ausführungsbeispiels für die Erfindung gezeigt. Auch in der Figur 8 sind längs der Abszisse der Winkel in willkürlichen Einheiten (w.E.) und längs der Ordinate die Phasenstromvorgaben für die Phasenströme ebenfalls in willkürlichen Einheiten (w.E.) aufgetragen. Das Strommuster gemäß der Figur 8 zeichnet sich dadurch aus, dass zu jedem Zeitpunkt innerhalb eines Ansteuerzyklusses eine der Phasen einen negativen Stromwert hat, während die anderen vier Phasen jeweils denselben positiven Stromwert aufweisen. Dabei entspricht die Amplitude des positiven Stromwertes einem Viertel der Amplitude des negativen Stromwertes, so dass zu jedem Zeitpunkt eines Ansteuerzyklusses die Summe der Phasenströme wiederum 0 beträgt. Auch hierbei tritt innerhalb eines Ansteuerzyklusses keine Lücke auf. Zu jedem Zeitpunkt, an welchem ein negativer Phasenstrom abgeschaltet wird, wird ein anderer negativer Phasenstrom zugeschaltet. Auch hier ist das Amplitudenverhältnis der jeweils zugeschalteten Phasenströme betragsmäßig so gewählt, dass die momentan zugeschalteten Phasenströme dem momentanen Strom der Gleichspannungsquelle entsprechen.

Aus dem in der Figur 8 eingezeichneten rechteckigen Kästchen ist ersichtlich, dass in diesem Winkelbereich gilt:

$$I\_Phase1 = - (I\_Phase2 + I\_Phase3 + I\_Phase4 + I\_Phase5).$$

Die Stromvorgaben sind in den Diagrammen gemäß den Figuren 7 und 8 nicht bezeichnet, da ähnlich einer Blockkommutierung eine Reduzierung des Zwischenkreisstromes auf 0 nur mit einer bestimmten Phasenstrom-Amplitude möglich ist, die sich im jeweiligen Einzelfall abhängig von der Spannungslage, den Ständerwiderständen, der Verschaltungsart des Motors und der aktuellen Gegeninduktion einstellt. Stellt man ein entsprechendes Pulsmuster ein, so wird sich mit steigender Drehzahl aufgrund der steigenden Gegeninduktion ein sinkender Batterie- und Phasenstrom einstellen. Daher sind weitere Phasenstromvorgaben notwendig mit einer höheren Amplitude, die sich einstellt.

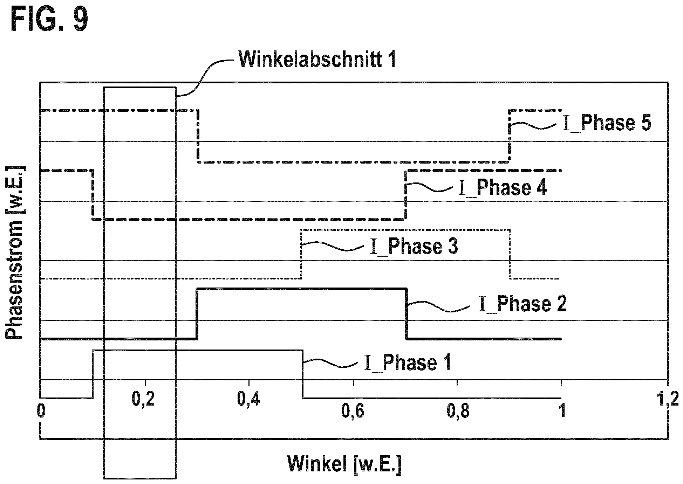

Die Figur 9 zeigt Diagramme zur Veranschaulichung eines dritten Ausführungsbeispiels für die Erfindung. Auch in der Figur 9 sind längs der Abszisse der Winkel in willkürlichen Einheiten (w.E.) und längs der Ordinate die Phasenstromvorgaben für die Phasenströme ebenfalls in willkürlichen Einheiten (w.E.) aufgetragen. Das Strommuster gemäß der Figur 9 zeichnet sich dadurch aus, dass zu jedem Zeitpunkt innerhalb eines Ansteuerzyklusses zwei Phasen denselben positiven Stromwert haben, während die anderen drei Phasen jeweils denselben negativen Stromwert aufweisen. Dabei entspricht die Amplitude des positiven Stromwertes dem 1,5-fachen der Amplitude des negativen Stromwertes. Folglich hat auch bei diesem Ausführungsbeispiel zu jedem Zeitpunkt eines Ansteuerzyklusses die Summe der Phasenströme den Wert 0. Auch bei diesem Ausführungsbeispiel tritt innerhalb eines Ansteuerzyklusses keine Lücke auf. Es sind zu jedem Zeitpunkt eines Ansteuerzyklusses zwei positive Phasenströme und drei negative Phasenströme eingeschaltet. Zu jedem Zeitpunkt, an welchem ein positiver Phasenstrom abgeschaltet wird, wird ein anderer positiver Phasenstrom zugeschaltet. Das Amplitudenverhältnis der jeweils zugeschalteten Phasenströme ist betragsmäßig so gewählt, dass die momentan zugeschalteten Phasenströme dem momentanen Strom der Gleichspannungsquelle entsprechen.

Aus dem in der Figur 9 eingezeichneten rechteckigen Kästen ist ersichtlich, dass in diesem Winkelbereich gilt:

$$(I\_Phase1 + I\_Phase5) = - (I\_Phase2 + I\_Phase3 + I\_Phase4).$$

Zur Reduzierung von Zwischenkreisströmen, die sich in der Summe aufheben, folgt das verwendete Ansteuermuster einem Flattop-Verfahren. Hierzu können beispielsweise zur Realisierung eines Ansteuermusters gemäß der Figur 7 im Winkel- bzw. Zeitabschnitt 1, der dem dort eingezeichneten Rechteck entspricht, der der Phase 1 zugehörige Highside-Schalter kontinuierlich durchgesteuert werden, während die anderen Phasen zum großen Teil ebenfalls Highside-seitig durchgeschaltet sind und abwechselnd der jeweilige Lowside-Schalter derart betätigt wird, dass zu jedem Zeitpunkt derselbe Strom aus der Gleichspannungsquelle gefordert wird. Dementsprechend sind bei dem in der Figur 9 gezeigten Ausführungsbeispiel im Winkel- bzw. Zeitabschnitt 1, der dem dort eingezeichneten Rechteck entspricht, die den Phasen 1 und 5 zugehörigen Highside-Schalter durchgesteuert, während die den Phasen 2, 3 und 4 zugehörigen Lowside-Schalter abwechselnd durchgesteuert werden.

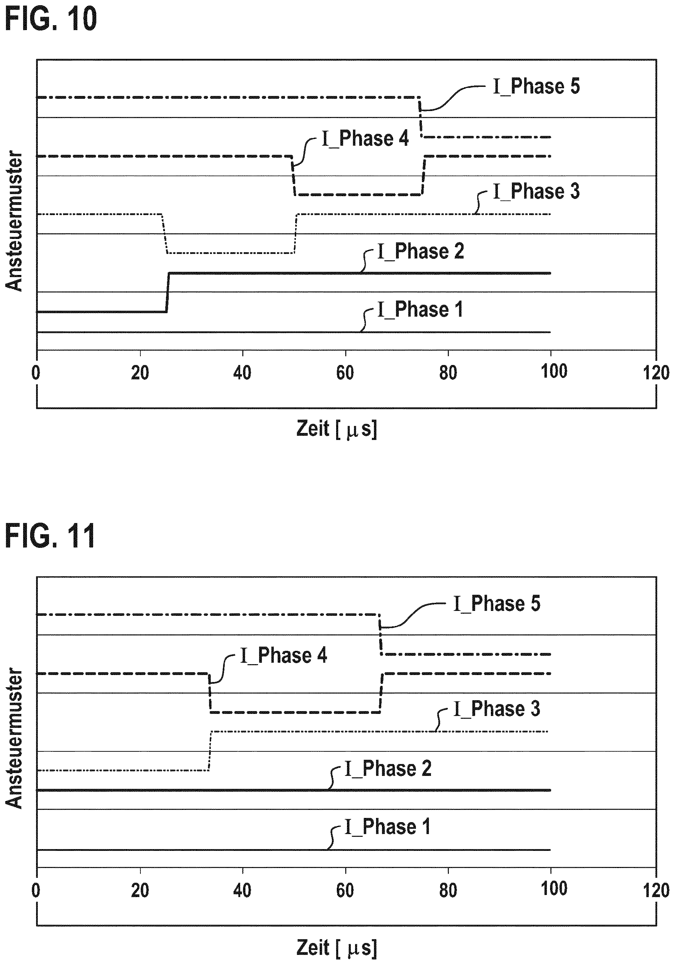

Die Figur 10 zeigt Diagramme zur Veranschaulichung eines Ansteuermusters für das in der Figur 7 gezeigte erste Ausführungsbeispiel. Gemäß diesem Ausführungsbeispiel wird ein vereinfachtes, trapezförmiges Ansteuermuster verwendet, um einen Stromverlauf zu realisieren, wie er in der Figur 7 im Winkel- bzw. Zeitabschnitt 1 gezeigt ist, für den Fall einer perfekt symmetrischen Maschine mit Sternpunktverschaltung bei Drehzahl = 0, d.h. ohne Einfluss einer induzierten Spannung. Dabei wurde beispielhaft von einer Ansteuerfrequenz von 10 KHz ausgegangen. Das Ansteuermuster wurde als ein 4:1-Ansteuermuster bezeichnet, da eine Phase (beim gezeigten Beispiel die Phase 1) kontinuierlich durchgesteuert ist, während die anderen vier Phasen zu jeweils gleichen Zeitanteilen angesteuert werden und deren Ansteuerung durchwechselt. Desweiteren bezeichnet 4:1 das Verhältnis der Phasenstrombeträge, da wie aus Figur 7 ersichtlich der positive Phasenstrom das 4-fache des negativen Strombetrags entspricht.

Im Falle einer Invertierung der vorstehend angegebenen Ansteuerung, d. h. im Falle einer kontinuierlichen Durchsteuerung der Lowside-Schalter und einer kurzzeitigen und durchwechselnden Ansteuerung der Highside-Schalter, ergibt sich ein Strommuster, wie es in der Figur 8 gezeigt ist.

Die Figur 11 zeigt ein Diagramm zur Veranschaulichung eines Ansteuermusters für das in der Figur 9 gezeigte Ausführungsbeispiel. Dabei wird ein vereinfachtes, trapezförmiges Ansteuermuster verwendet, um einen Stromverlauf zu realisieren, wie er in der Figur 9 im Winkel- bzw. Zeitabschnitt 1 gezeigt ist. Bei diesem Ausführungsbeispiel wird eine höhere Ansteuerdauer mit gleichzeitig minimalem Zwischenkreisstrom realisiert. Die Ansteuerung folgt dem nächst kleineren ganzzahligen Vielfachen, also "3". Aus dem 3:2-Ansteuermuster gemäß der Figur 11 ist ersichtlich, dass im Vergleich zur Figur 9 ein Blockstrom mit einer höheren Amplitude vorliegt.

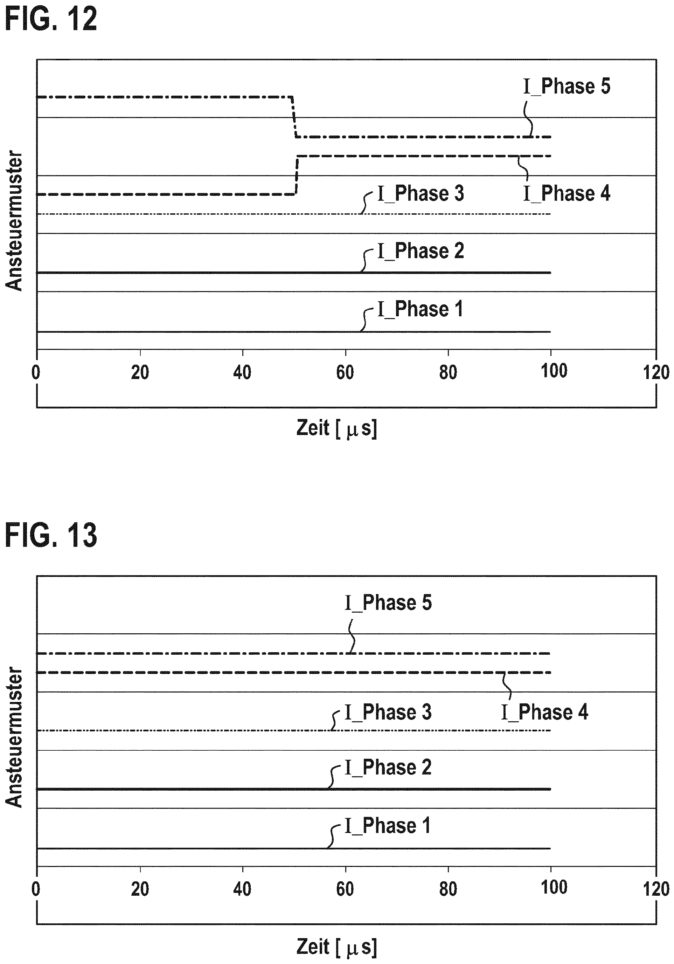

Die Figur 12 zeigt Diagramme zur Veranschaulichung eines Ansteuermusters zur Realisierung eines Blockstroms mit 2:3-Ansteuerung gemäß einem vierten Ausführungsbeispiel für die Erfindung. Bei einer derartigen Ansteuerung liegen in den kontinuierlich durchgesteuerten Phasen 3, 4 und 5 je nach verwendeter Verschaltung (Dreieck, Stern, Drudenfuß, etc.) unterschiedlich hohe Phasenströme vor, die die Momentenausnutzung verbessern.

Die Figur 13 zeigt Diagramme zur Veranschaulichung eines Ansteuermusters eines Blockstroms mit einer 1:4-Ansteuerung gemäß einem fünften Ausführungsbeispiel für die Erfindung. Dies entspricht einer klassischen Blockkommutierung, bei welcher innerhalb eines Ansteuerfensters kein Schaltwechsel erfolgt.

Damit besteht die Möglichkeit, auch unterhalb der Ströme, die sich bei einer klassischen Blockkommutierung ergeben, weitere Stromstufen derart einzustellen, dass außerordentlich niedrige Zwischenkreisströme fließen.

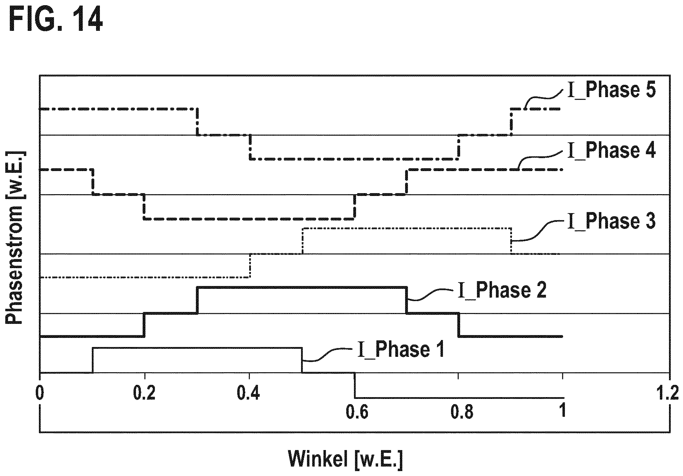

Die Figur 14 zeigt Diagramme zur Veranschaulichung eines sechsten Ausführungsbeispiels für die Erfindung. Bei diesem Ausführungsbeispiel wird im Unterschied zu den vorstehend beschriebenen Ausführungsbeispielen auch Gebrauch gemacht von einem oder mehreren Phasenströmen, die den Wert 0 haben. In Figur 14 ergibt sich ein 2:2 Diagramm, wobei auch ein 3:1, 2:1, 1:1 möglich ist.

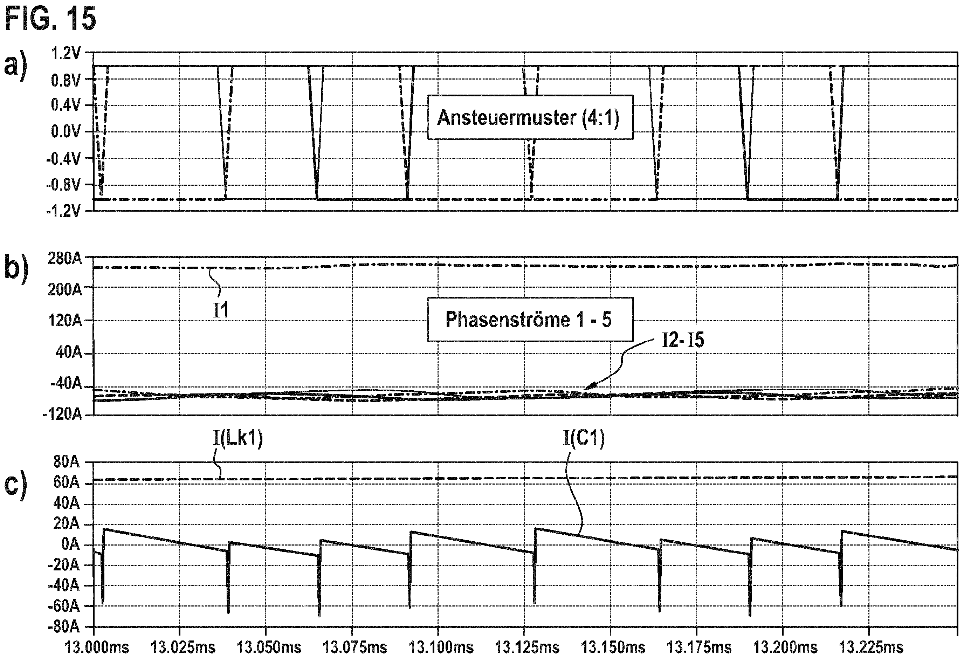

Die Figur 15 zeigt Diagramme zur Veranschaulichung von Stromverläufen bei Verwendung des in der Figur 10 gezeigten Ansteuermusters. Dabei sind in der Figur 15a das verwendete 4:1-Ansteuermuster, in der Figur 15b die Phasenströme 1 - 5 und in der Figur 15c der Generatorstrom I(Lk1) und der Zwischenkreisstrom I(C1) dargestellt. Dabei handelt es sich um eine Simulation des Zwischenkreisstromes, die aber an die realen Bedingungen angepasst ist. Dies bedeutet, dass sie ohmsche Übergangs- und Leitungswiderstände sowie Verzögerungszeiten bei den transienten Schaltvorgängen der Leistungsschalter berücksichtigt. Daher ist der reale Effektivstrom des Zwischenstromkreiskondensators ungleich 0 und ist abhängig von den elektrischen Parametern der Ansteuer- und Leistungselektronik.

Des Weiteren wird der Zwischenkreisstrom zusätzlich durch Änderungen des Ständerstromes, die bei den Zeitabschnittswechseln auftreten, in Abhängigkeit von der Einschwingzeit der Maschinen-Ständerinduktivität weiter erhöht. Ein derartiger Zeitabschnittswechsel liegt beispielsweise bei dem in der Figur 7 gezeigten Ausführungsbeispiel vor, wenn von dem mit dem rechteckigen Rahmen gekennzeichneten Winkel- bzw. Zeitabschnitt zum nächsten Winkel- bzw. Zeitabschnitt übergegangen wird.

Bei dem vorstehend beschriebenen Beispiel konnte bei einem effektiven Phasenstrom von etwa 120 A ein effektiver Zwischenkreisstrom von ca. 30 A erreicht werden.

Bei einem herkömmlichen Ansteuerverfahren, beispielsweise einer Center-Aligned-Ansteuerung, liegt der sich einstellende Zwischenkreisstrom bei gleichen elektrischen Bedingungen bei etwa 85 A.

Folglich wird bei diesem Beispiel eine Reduktion des Zwischenkreisstromes um etwa 65% erreicht.

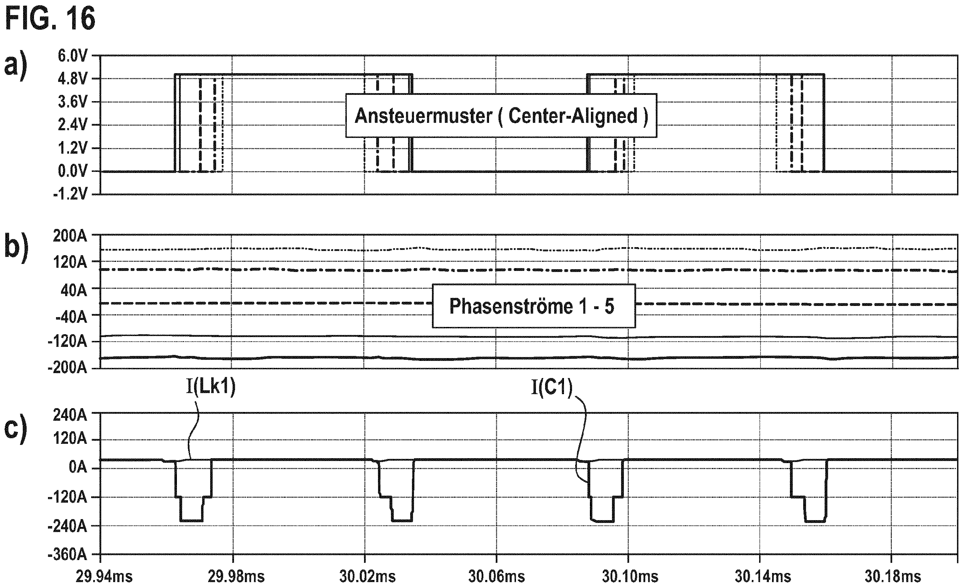

Die Figur 16 zeigt Diagramme zur Veranschaulichung von Stromverläufen bei einer bekannten Center-Aligned-Ansteuerung. Dabei sind in der Figur 16a das verwendete Ansteuermuster, in der Figur 16b die Phasenströme 1 - 5 und in der Figur 16c der Generatorstrom I(Lk1) und der Zwischenkreisstrom I(C1) dargestellt.

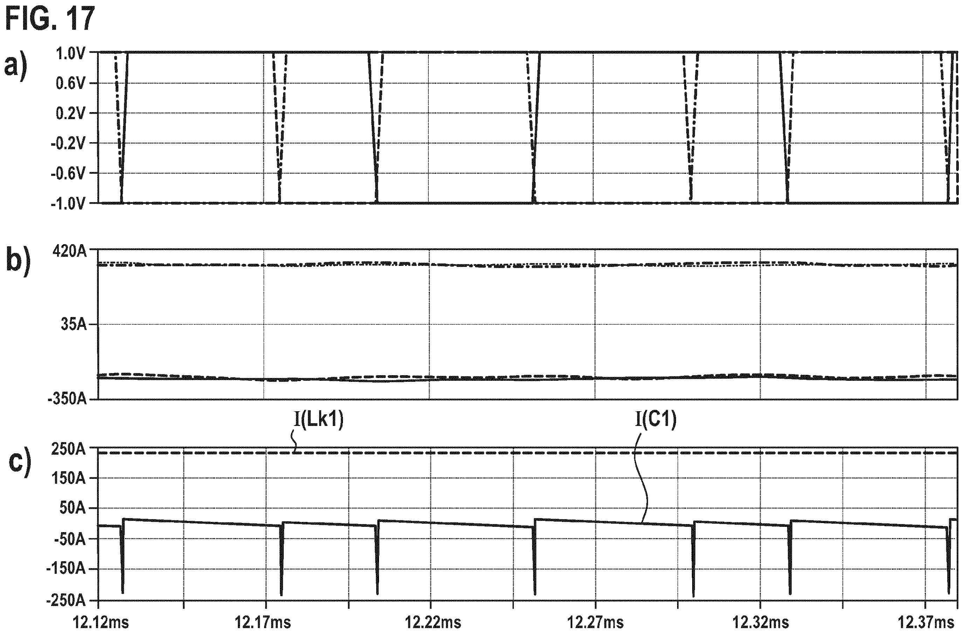

Die Figur 17 zeigt im Unterschied dazu Diagramme von Stromverläufen bei Verwendung eines 3:2-Ansteuermusters gemäß der Figur 11. Es ist ersichtlich, dass bei diesem Ausführungsbeispiel bei einem effektiven Phasenstrom von 260 A ein effektiver Zwischenkreisstrom von etwa 70 A erreicht wurde.

Stellt man diese Parameter bei dem herkömmlichen Center-Aligned-Ansteuermuster ein, dann liegt der sich ergebende Zwischenkreisstrom bei etwa 230 A.

Folglich kann bei diesem Beispiel mittels eines Verfahrens gemäß der Erfindung eine Reduzierung des effektiven Zwischenkreisstromes um etwa 70% erreicht werden.

Mittels eines Verfahrens gemäß der Erfindung wird nach alledem eine starke Reduzierung des Zwischenkreisstromes erreicht. Dabei kommen einfache Ansteuermuster zur Anwendung, die sich dadurch auszeichnen, dass die Ansteuerblöcke gleich groß oder nahezu gleich groß sind, dass sich die einzelnen Ansteuerblöcke als nahezu ganzzahlige Vielfache von 1 ergeben und dass das Muster der Ansteuerungen nur beim Vorliegen eines elektrischen Winkels von 360°/Phasenzahl oder von 360°/(2 ● Phasenzahl) gewechselt wird. Weitere Vorteile der Erfindung bestehen in der Möglichkeit einer stufenweisen Einstellung von unterschiedlichen Stromhöhen und einer Anwendbarkeit bei Maschinen mit einer beliebigen Anzahl von Stromphasen, vorzugsweise bei Maschinen, der Phasenzahl größer als 3 ist.


**Patentansprüche**

1. Verfahren zur Ansteuerung einer mit einer Gleichspannungsquelle verbundenen mehrphasigen Maschine mit n Phasen, welche einen mit einem Zwischenkreiskondensator versehenen Zwischenkreis, Phasenwicklungen und pro Phase einen Highside-Schalter und einen Lowside-Schalter aufweist, wobei die den einzelnen Phasen zugeordneten Schalter von einer Steuereinheit mit Steuersignalen beaufschlagt werden, **dadurch gekennzeichnet, dass** die Steuereinheit zur Reduzierung des Zwischenkreisstromes blockförmige Steuersignale für die den einzelnen Phasen zugeordneten Schalter derart bereitstellt, dass trapezförmige oder pulsförmige Phasenströme vorgegeben werden, dass zu jedem Zeitpunkt eines jeden Ansteuerzyklusses mindestens ein Phasenstrom zugeschaltet ist, wobei das Amplitudenverhältnis der vorgegebenen Phasenströme betragsmäßig so gewählt ist, dass für das Amplitudenverhältnis der vorgegebenen Phasenströme die folgende Beziehung gilt:

$$A = (n - x) / (n - y),$$

wobei

$$x + y = n,$$

$$n = 3, 4, 5, 6, 7, ...$$

$$0 < x < n$$

$$0 < y < n.$$

**2.** Verfahren nach Anspruch 1, **dadurch gekennzeichnet, dass** die Maschine eine fünfphasige Maschine ist und dass das Amplitudenverhältnis der vorgegebenen Phasenströme 4:1, 3:2, 2:3 oder 1:4 beträgt.

**3.** Verfahren nach einem der vorhergehenden Ansprüche, **dadurch gekennzeichnet, dass** die Steuereinheit die den einzelnen Phasen zugeordneten Schalter nach dem Flattop-Verfahren ansteuert, so dass eine oder mehr Phasen innerhalb eines PWM-Fensters nicht getaktet werden.

**4.** Verfahren nach einem der vorhergehenden Ansprüche, **dadurch gekennzeichnet, dass** die Steuereinheit die Steuersignale derart erzeugt, dass innerhalb eines Ansteuerzyklusses bei jeder Abschaltung eines Phasenstromes eines vorgegebenen Stromwertes eine Zuschaltung eines anderen Phasenstromes mit demselben Stromwert erfolgt.

**5.** Verfahren nach einem der vorhergehenden Ansprüche, **dadurch gekennzeichnet, dass** die Steuereinheit die Steuersignale derart erzeugt, dass die Stromwerte aller zugeschalteten Phasenströme stets von Null verschieden sind.

**6.** Verfahren nach einem der Ansprüche 1-4, **dadurch gekennzeichnet, dass** die Steuereinheit die Steuersignale derart erzeugt, dass die Stromwerte eines oder mehrerer zugeschalteter Phasenströme zwischenzeitlich Null sind, wobei jeweils nach Abschalten eines Phasenstromes mit einem Wert ungleich 0 ein anderer Phasenstrom mit demselben Stromwert zugeschaltet wird.

**7.** Verfahren nach Anspruch 6, **dadurch gekennzeichnet, dass** bei einer fünfphasigen Maschine die Phasenströme, deren Stromwerte ungleich Null sind, in einem Amplitudenverhältnis von 3:1, 2:1, 2:2, 1:2, 1:3 oder 1:1 stehen.

**8.** Verfahren nach einem der vorhergehenden Ansprüche, **dadurch gekennzeichnet, dass** zu jedem Zeitpunkt eines jeden Ansteuerzyklusses ein vorgegebener Phasenstrom einen positiven Stromwert hat, die weiteren zugeschalteten vorgegebenen Phasenströme jeweils denselben negativen Stromwert haben und die Summe der negativen Stromwerte der zugeschalteten Phasenströme gleich dem positiven Stromwert ist.

**9.** Verfahren nach einem der Ansprüche 1- 7, **dadurch gekennzeichnet, dass** zu jedem Zeitpunkt eines jeden Ansteuerzyklusses ein vorgegebener Phasenstrom einen negativen Stromwert hat, die weiteren zugeschalteten vorgegebenen Phasenströme jeweils denselben positiven Stromwert haben und die Summe der positiven Stromwerte der zugeschalteten Phasenströme gleich dem negativen Stromwert ist.

**10.** Verfahren nach einem der Ansprüche 1-7, **dadurch gekennzeichnet, dass** zu jedem Zeitpunkt eines jeden Ansteuerzyklusses mehrere vorgegebene Phasenströme denselben positiven Stromwert haben, die weiteren zugeschalteten vorgegebenen Phasenströme jeweils denselben negativen Stromwert haben und die Summe der negativen Stromwerte der zugeschalteten Phasenströme gleich der Summe der positiven Stromwerte der zugeschalteten Phasenströme ist.

**11.** Steuereinheit, die eingerichtet ist, eines der Verfahren nach einem der vorhergehenden Ansprüche durchzuführen.

**Claims**

**1.** Method for driving a polyphase machine having n phases which is connected to a DC voltage source and which has a DC link provided with a DC link capacitor, phase windings and, per phase a highside switch and a low-side switch, wherein control signals are applied to the switches assigned to the individual phases by a control unit, **characterized in that** the control unit, in order to reduce the DC link current, provides lock-type control signals for the switches assigned to the individual phases in such a way that trapezoidal or pulsed phase currents are predefined, that at least one phase current is connected at each point in time in each drive cycle, wherein the amplitude ratio of the predefined phase currents is chosen in terms of absolute value such that the following relationship holds true for the amplitude ratio of the predefined phase currents:

$$A = (n - x)/(n - y),$$

wherein

$$x + y = n,$$

$$n = 3, 4, 5, 6, 7, \ldots$$

$$0 < x < n$$

$$0 < y < n.$$

**2.** Method according to Claim 1, **characterized in that** the machine is a five-phase machine, and **in that** the amplitude ratio of the predefined phase currents is 4:1, 3:2, 2:3 or 1:4.

**3.** Method according to either of the preceding claims, **characterized in that** the control unit drives the switches assigned to the individual phases according to the flat-top method, such that one or more phases within a PWM window are not clocked.

**4.** Method according to any of the preceding claims, **characterized in that** the control unit generates the control signals in such a way that within a drive cycle, each time one phase current of a predefined current value is disconnected, another phase current having the same current value is connected.

**5.** Method according to any of the preceding claims, **characterized in that** the control unit generates the control signals in such a way that the current values of all the connected phase currents are always different from zero.

**6.** Method according to any of Claims 1-4, **characterized in that** the control unit generates the control signals in such a way that the current values of one or more connected phase currents are zero in the meantime, wherein in each case after one phase current having a value not equal to 0 has been disconnected, another phase current having the same current value is connected.

**7.** Method according to Claim 6, **characterized in that**, in the case of a five-phase machine, the phase currents whose current values are not equal to zero are in an amplitude ratio of 3:1, 2:1, 2:2, 1:2, 1:3 or 1:1.

**8.** Method according to any of the preceding claims, **characterized in that** at each point in time in each drive cycle, a predefined phase current has a positive current value, the further connected predefined phase currents each have the same negative current value and the sum of the negative current values of the connected phase currents is equal to the positive current value.

**9.** Method according to any of Claims 1-7, **characterized in that** at each point in time in each drive cycle, a predefined phase current has a negative current value, the further connected predefined phase currents each have the same positive current value and the sum of the positive current values of the connected phase currents is equal to the negative current value.

**10.** Method according to any of Claims 1-7, **characterized in that** at each point in time in each drive cycle, a plurality of predefined phase currents have the same positive current value, the further connected predefined phase currents each have the same negative current value and the sum of the negative current values of the connected phase currents is equal to the sum of the positive current values of the connected phase currents.

**11.** Control unit configured to carry out one of the methods according to any of the preceding claims.

**Revendications**

**1.** Procédé de commande d'une machine polyphasée à n phases connectée à une source tension continue, laquelle machine comporte un circuit intermédiaire pourvu d'un condensateur de circuit intermédiaire, des enroulements de phase et, pour chaque phase, un commutateur d'extrémité supérieure et un commutateur d'extrémité inférieure, dans lequel les commutateurs associés aux phases individuelles sont attaqués par une unité de commande au moyen de signaux de commande, **caractérisé en ce que** l'unité de commande, pour réduire le courant de circuit intermédiaire, fournit des signaux de commande en forme de blocs pour les commutateurs associés aux phases individuelles, de manière à ce que des courants de phase trapézoïdaux ou impulsionnels soient prédéterminés, et **en ce qu'**au moins un courant de phase est activé à chaque instant d'un cycle de commande respectif, dans lequel la valeur du rapport des amplitudes des courants de phase prédéterminés est sélectionnée de manière à ce que, pour le rapport des amplitudes des courants de phase prédéterminés, la relation suivante soit respectée :

$$A = (n - x)/(n - y),$$

où

$$x + y = n,$$

$$n = 3, 4, 5, 6, 7, \dots$$

$$0 < x < n$$

$$0 < y < n.$$

**2.** Procédé selon la revendication 1, **caractérisé en ce que** la machine est une machine à cinq phases et **en ce que** le rapport des amplitudes des courants de phase prédéterminés est de 4:1, 3:2, 2:3 ou 1:4.

**3.** Procédé selon l'une quelconque des revendications précédentes, **caractérisé en ce que** l'unité de commande commande les commutateurs associés aux phases individuelles conformément au procédé à partie supérieure plate, de manière à ce qu'une ou plusieurs phases ne soient pas cadencées à l'intérieur d'une fenêtre PWM.

**4.** Procédé selon l'une quelconque des revendications précédentes, **caractérisé en ce que** l'unité de commande génère les signaux de commande de manière à ce que, lors de chaque désactivation d'un courant de phase ayant une valeur de courant prédéterminée, une activation d'un autre courant de phase soit effectuée à l'intérieur d'un cycle de commande avec la même valeur de courant.

**5.** Procédé selon l'une quelconque des revendications précédentes, **caractérisé en ce que** l'unité de commande génère les signaux de commande de manière à ce que les valeurs de courant de tous les courants de phase activés soient toujours différentes de zéro.

6. Procédé selon l'une quelconque des revendications 1 - 4, **caractérisé en ce que** l'unité de commande génère les signaux de commande de manière à ce que les valeurs de courant d'un ou plusieurs courants de phase activés soient provisoirement égales à zéro, dans lequel, après la désactivation d'un courant de phase ayant une valeur différente de 0, un autre courant de phase ayant la même valeur de courant est activé.

7. Procédé selon la revendication 6, **caractérisé en ce que**, pour une machine à cinq phases, les courants de phase dont les valeurs de courant sont différentes de zéro présentent un rapport d'amplitudes de 3:1, 2:1, 2:2, 1:2, 1:3 ou 1:1.

8. Procédé selon l'une quelconque des revendications précédentes, **caractérisé en ce que**, à chaque instant d'un cycle de commande respectif, un courant de phase prédéterminé présente une valeur de courant positive, les autres courants de phase activés prédéterminés présentent respectivement les mêmes valeurs de courant négatives et la somme des valeurs de courant négatives des courants de phase activés est égale à la valeur de courant positive.

9. Procédé selon l'une quelconque des revendications 1 - 7, **caractérisé en ce que**, à chaque instant d'un cycle de commande respectif, un courant de phase prédéterminé présente une valeur de courant négative, les autres courants de phase activés prédéterminés présentent respectivement la même valeur de courant positive et la somme des valeurs de courant positives des courants de phase activés est égale à la valeur de courant négative.

10. Procédé selon l'une quelconque des revendications 1 - 7, **caractérisé en ce que**, à chaque instant d'un cycle de commande respectif, plusieurs courants de phase prédéterminés présentent la même valeur de courant positive, les autres courants de phase activés prédéterminés présentent respectivement la même valeur de courant négative et la somme des valeurs de courant négatives des courants de phase activés est égale à la somme des valeurs de courant positives des courants de phases activés.

11. Unité de commande conçue pour mettre en oeuvre le procédé selon l'une quelconque des revendications précédentes.

FIG. 1

LE

I_Gen    I_Bat

HS1   HS2   HS3   HS4   HS5

I_ZK

B+

I_1

C_ZK    B

I_5

ZK    B-

LS1   LS2   LS3   LS4   LS5

Ph1   Ph2   Ph3   Ph4   Ph5

A2

A1    2    A3

1    3

5    4

A5    A4

S1    · · ·    S10

S

EP 2 730 021 B1

FIG. 2

FIG. 3

EP 2 730 021 B1

16

FIG. 4

## FIG. 5

a)

b)

EP 2 730 021 B1

FIG. 6

## FIG. 7

Winkelabschnitt 1

I_Phase 5

I_Phase 4

I_Phase 3

I_Phase 2

I_Phase 1

Phasenstrom [w.E.]

0    0,2    0,4    0,6    0,8    1    1,2

Winkel [w.E.]

## FIG. 8

Winkelabschnitt 1

I_Phase 5

I_Phase 3

I_Phase 4

I_Phase 2

I_Phase 1

Phasenstrom [w.E.]

0    0,2    0,4    0,6    0,8    1    1,2

Winkel [w.E.]

# FIG. 9

## FIG. 10

## FIG. 11

## FIG. 12

## FIG. 13

FIG. 14

Winkel [w.E.]

# FIG. 15

a) Ansteuermuster (4:1)

b) I1   Phasenströme 1 - 5   I2-I5

c) I(Lk1)   I(C1)

EP 2 730 021 B1

# FIG. 16

**a)**

Ansteuermuster ( Center-Aligned )

**b)**

Phasenströme 1 - 5

**c)**

I(Lk1)  I(C1)

EP 2 730 021 B1

# FIG. 17

**IN DER BESCHREIBUNG AUFGEFÜHRTE DOKUMENTE**

**In der Beschreibung aufgeführte Patentdokumente**

- DE 102011076676